# DEMANDE DE BREVET EUROPEEN

(11) **EP 4 763 815 A1**
(43) Date de publication de la demande: **24.06.2026**
(21) Numéro de dépôt: 24307169.3
(22) Date de dépôt: 18.12.2024
(51) Int. Cl.: C03B 40/027

(54) **DISPOSITIF D ASPIRATION DE FLAMME ET/OU FUMÉE DE GRAISSAGE POUR UNE MACHINE DE FORMAGE DE VERRE**

(71) Demandeur: VERALLIA PACKAGING, 92400 Courbevoie (FR)
(72) Inventeur: Ricard, Nicolas, 81120 Fauch (FR); Manens, Alexandre, 81990 Frejarolles (FR); Dajoux, Yannick, 21320 Commarin (FR)
(74) Mandataire: Germain Maureau

(57) **Abrégé**

Dispositif d'aspiration (1) de flamme et/ou fumée de graissage (2) pour une machine de formage de verre (3), la machine de formage de verre (3) comprenant au moins une section (5) de formage de verre, ladite section (5) comprenant un moule d'ébauche (7) pour former au moins une ébauche en verre, le moule d'ébauche (7) présentant au moins une chambre d'ébauche (9) destinée à recevoir une paraison correspondante pour la transformer en ébauche en verre, le dispositif d'aspiration (1) de flamme et/ou fumée de graissage (2) comprenant : au moins un conduit d'évacuation (19) configuré pour être raccordé à un orifice (21) ménagé dans une chambre d'ébauche (9) correspondante ; un mécanisme d'aspiration (23) configuré pour créer dans l'au moins un conduit d'évacuation (19) une sous-pression de sorte à engendrer une aspiration dans ladite chambre d'ébauche (9) vers une extrémité d'échappement (25) vers l'extérieur de l'au moins un conduit d'évacuation (19).

## Description

### Domaine de l'invention

La présente invention concerne un dispositif d'aspiration de flamme et/ou fumée de graissage pour une machine de formage de verre.

### Art antérieur

Une machine de formage de verre comprend un moule d'ébauche dans lequel une paraison est déposée pour être ensuite transformée par soufflage en ébauche en verre.

L'ébauche en verre est par la suite transférée vers un moule de finition pour un soufflage final conférant à l'ébauche en verre sa forme finale. La machine de formage de verre produit ainsi des articles en verre comme par exemple des bouteilles.

Le moule d'ébauche comprend une ou plusieurs chambres d'ébauche recevant chacune une paraison. Lors de la mise en forme de l'ébauche en verre à partir de la paraison, le verre vient en contact avec les parois de la chambre d'ébauche et risque d'adhérer par endroit aux parois.

Il y a donc un besoin de réaliser régulièrement une lubrification des parois pour améliorer la qualité des ébauches en verre et limiter l'usure des parois.

Une première possibilité consiste à appliquer manuellement une couche protectrice d'huile graphitée à l'aide d'un badigeon. Une deuxième possibilité consiste à émettre une flamme et/ou fumée de graissage depuis l'extérieur du moule d'ébauche pour que des résidus de combustion se déposent sur les parois et constituent ainsi une couche protectrice.

La première possibilité s'avère difficile à mettre en oeuvre puisqu'il est nécessaire d'arrêter la machine de formage. La deuxième possibilité présente également des inconvénients.

La difficulté principale consiste à s'assurer que la flamme et/ou fumée de graissage se développe bien à l'intérieur de la chambre d'ébauche et ne présente qu'une partie limitée s'échappant vers l'extérieur.

En effet, par la construction de la machine de formage de verre, la flamme et/ou fumée de graissage ne peut être émise que par le dessus de la chambre d'ébauche de sorte à rentrer par une ouverture de passage de la paraison.

La flamme et/ou fumée de graissage ayant tendance à remonter lorsqu'elle se développe, crée une perturbation visuelle avec une lumière intense qui peut gêner les opérateurs qui surveillent la machine de formage de verre.

Par ailleurs, il est difficile de bien lubrifier le bas de la chambre d'ébauche qui est à l'opposé de la buse émettant la flamme et/ou fumée de graissage.

La présente invention vise à résoudre tout ou partie des inconvénients mentionnés ci-dessus.

### Exposé de l'invention

A cet effet, la présente invention concerne un dispositif d'aspiration de flamme et/ou fumée de graissage pour une machine de formage de verre, la machine de formage de verre comprenant au moins une section de formage de verre, ladite section comprenant un moule d'ébauche pour former au moins une ébauche en verre, le moule d'ébauche présentant au moins une chambre d'ébauche destinée à recevoir une paraison correspondante pour la transformer en ébauche en verre, le dispositif d'aspiration de flamme et/ou fumée de graissage comprenant :
au moins un conduit d'évacuation configuré pour être raccordé à un orifice ménagé dans une chambre d'ébauche correspondante,
un mécanisme d'aspiration configuré pour créer dans l'au moins un conduit d'évacuation une sous-pression de sorte à engendrer une aspiration dans ladite chambre d'ébauche vers une extrémité d'échappement vers l'extérieur de l'au moins un conduit d'évacuation.

En d'autres termes, le mécanisme d'aspiration crée une aspiration à l'intérieur de chaque chambre d'ébauche. La chambre d'ébauche présente une ouverture vers l'extérieur, l'ouverture de passage, qui aspire à son tour vers l'intérieur de ladite chambre d'ébauche.

Par « sous-pression », il est entendu une pression inférieure à la pression dans la chambre d'ébauche de sorte à créer une circulation des gaz présents dans la chambre d'ébauche.

Cette disposition permet ainsi d'aspirer la flamme et/ou fumée de graissage vers l'intérieur de la chambre d'ébauche et ainsi diminuer la portion de la flamme et/ou fumée de graissage à l'extérieur de la chambre d'ébauche au niveau de l'ouverture de passage.

L'expression « flamme et/ou fumée de graissage entrant dans la chambre d'ébauche » signifie que la flamme et/ou fumée de graissage est émise à l'extérieur de la chambre d'ébauche par exemple par une buse d'émission qui est distante de l'ouverture de passage. La flamme et/ou fumée de graissage pénètre ainsi dans la chambre d'ébauche par l'ouverture de passage.

Le dispositif d'aspiration est adapté à tout type de lubrification engendrant une flamme et/ou fumée de graissage, la lubrification pouvant être réalisée de manière automatique ou manuelle par l'émission d'une flamme et/ou application d'un produit dédié. En alternative à l'émission d'une flamme, le graissage peut être réalisé par dépôt d'une matière dédiée manuellement, à l'aide de robots spray, brosses ou par pulvérisation de sprays huileux.

La lubrification est améliorée puisque la flamme et/ou fumée de graissage se décale vers l'intérieur de la chambre d'ébauche. Il y a également moins de résidus de combustion qui sont disséminés à l'extérieur de la chambre d'ébauche. Ceci a pour conséquence d'améliorer la propreté de la machine de formage de verre, notamment à proximité de l'au moins une ouverture de passage. Il y a également moins de risque pour un opérateur à proximité d'inhaler des résidus de combustion.

D'une manière générale, la lubrification est améliorée et la durée de vie du moule d'ébauche est allongée car une bonne lubrification protège de l'usure.

La flamme et/ou fumée de graissage est également masquée pour un observateur extérieur, ce qui diminue le dérangement visuel lié à la lubrification. Le raccordement à l'orifice peut être direct ou indirect par l'utilisation d'une pièce de liaison du dispositif d'aspiration de flamme et/ou fumée de graissage.

Selon un aspect de l'invention, le mécanisme d'aspiration comprend au moins un raccord d'aspiration configuré pour raccorder l'au moins un conduit d'évacuation à une source de gaz sous pression de la machine de formage de verre pour créer la sous-pression.

La machine de formage de verre comprend une source de gaz sous pression utilisée par exemple pour le pilotage de certains éléments de la machine de formage de verre comme de vannes ou vérins pneumatiques.

Le dispositif d'aspiration de flamme et/ou fumée de graissage utilise la source de gaz sous pression déjà présente, ce qui est avantageux pour limiter l'encombrement et la maintenance du dispositif d'aspiration de flamme et/ou fumée de graissage.

La source de gaz sous pression peut comprendre un compresseur à air et un réservoir d'air sous pression ainsi qu'un ensemble de tuyaux de raccordement. La source de gaz sous pression peut alternativement comprendre une bouteille de gaz sous pression à remplacer régulièrement.

Selon une possibilité, le dispositif d'aspiration de flamme et/ou fumée de graissage comprend une pluralité de conduits d'évacuation indépendants, un raccord d'aspiration étant ménagé dans chaque conduit d'évacuation.

Selon une autre possibilité, le dispositif d'aspiration de flamme et/ou fumée de graissage comprend une pluralité de conduits d'évacuation raccordés ensemble vers une unique extrémité d'échappement vers l'extérieur.

Dans ce cas, il est possible de prévoir un seul raccord d'aspiration apte à créer une dépression dans l'ensemble des conduits d'évacuation.

Selon un aspect de l'invention, l'au moins un raccord d'aspiration présente une géométrie interne agencée pour induire un effet venturi pour créer la sous-pression.

Pour favoriser l'aspiration, le gaz sous pression passe dans une partie du raccord d'aspiration apte à engendrer un effet venturi. Par l'accélération du gaz sous pression dans cette partie, la pression du gaz est diminuée. La sous-pression est ainsi engendrée dans le conduit d'évacuation.

Selon un aspect de l'invention, le mécanisme d'aspiration comprend une vanne de réglage d'ouverture d'alimentation en gaz en provenance de la source de gaz sous pression.

Cette disposition permet de régler la quantité de gaz qui est injectée dans l'au moins un raccord d'évacuation. Plus la vanne de réglage est ouverte plus la dépression sera importante et plus l'aspiration sera importante.

Selon un aspect de l'invention, la vanne de réglage comprend une commande utilisateur pour régler l'ouverture. De préférence, le mécanisme d'aspiration comprend un manomètre pour mesurer une pression relative à la sous-pression engendrée par l'ouverture de la vanne de réglage.

Cette disposition permet d'ajuster l'aspiration pour que la flamme et/ou fumée de graissage soit aspirée vers l'intérieur de l'au moins une chambre d'ébauche de manière suffisante pour que la flamme et/ou fumée de graissage soit entièrement comprise dans la chambre d'ébauche mais sans que la flamme et/ou fumée de graissage ne rentre dans l'au moins un conduit d'évacuation.

En pratique, des essais peuvent être réalisés pour déterminer l'ouverture de la vanne de réglage qui convient et la pression au manomètre correspondante.

Le contrôle de la constance de la pression au manomètre permet ainsi de s'assurer du bon réglage et éventuellement d'ajuster l'ouverture de la vanne de réglage.

Selon un aspect de l'invention, le dispositif d'aspiration de flamme et/ou fumée de graissage comprend un système de collecte de résidus raccordé à l'au moins un conduit d'évacuation de sorte à ce qu'un gaz d'échappement émis à l'au moins une extrémité d'échappement comprenne une quantité de particules volatiles en deçà d'une limite déterminée.

Le gaz d'échappement est issu de la combustion de la flamme et/ou fumée de graissage dans l'au moins une chambre d'ébauche. Le but est de tapisser l'intérieur de l'au moins une chambre d'ébauche de résidus de combustion qui sont des imbrulés ayant des propriétés de lubrification.

Cependant, l'aspiration peut entraîner une partie de ces résidus dans l'au moins un conduit d'évacuation. Le système de collecte de résidus évite ainsi de relâcher dans l'air ambiant à proximité de la machine de formage de verre les résidus entrainés.

La limite déterminée correspond à la performance de filtrage et au réglage du système de collecte de résidus.

Le système de collecte de résidus peut être un séparateur humide. Alternativement, le système de collecte de résidus peut comprendre un tuyau raccordé à un système de traitement et de récupération de déchets de la machine de formage contenant de l'eau. Ledit tuyau est raccordé sous la surface de l'eau ou au ras de la surface de l'eau de sorte à ce que les résidus soient captés par l'eau.

La présente invention concerne également une machine de formage de verre comprenant un dispositif d'aspiration de flamme et/ou fumée de graissage tel que décrit ci-dessus.

Selon un aspect de l'invention, la machine de formage de verre comprend en outre un bras pour la lubrification équipé d'au moins une buse d'émission de flamme et/ou fumée de graissage, le bras pour la lubrification étant apte à se déplacer, entre une position rétractée dans laquelle le bras est disposé hors d'une zone en regard de l'au moins une ouverture de passage selon un axe d'extension propre de ladite chambre d'ébauche et une position de lubrification dans laquelle l'au moins une buse d'émission est alignée avec l'axe d'extension propre correspondant et est apte à émettre une flamme et/ou fumée de graissage entrant dans la chambre d'ébauche correspondante pour recouvrir une surface interne de ladite chambre d'ébauche avec des résidus de combustion ayant des propriétés de lubrification.

Selon un aspect de l'invention, l'ouverture de passage est agencée pour l'entrée de la paraison selon la direction d'extension propre. La lubrification est réalisée avant l'entrée de la paraison pour assurer une bonne lubrification.

Il a été observé que la couche de résidus présente une épaisseur limitée permettant de réaliser juste après la lubrification une ébauche en verre directement utilisable.

Le bras pour la lubrification est apte à se déplacer autour et le long d'un axe de déplacement, parallèle à l'au moins un axe d'extension propre.

Selon un aspect de l'invention, la machine de formage de verre comprend également un guide de chargement présentant au moins un entonnoir adapté pour guider axialement une paraison correspondante en une position de coopération avec le moule d'ébauche dans laquelle un passage de l'au moins un entonnoir est axialement aligné avec l'au moins une ouverture de passage correspondante.

Chaque section comprend en outre un poste de découpe pour former l'au moins une paraison à partir de verre fondu.

Selon un aspect de l'invention, chaque section comprend un conduit d'acheminement d'un produit pour la combustion agencé pour coopérer avec le bras et alimenter la buse d'émission d'une flamme et/ou fumée de graissage, ledit conduit d'acheminement étant raccordé à un réservoir de produit pour la combustion de la machine de formage de verre ou un raccord à une alimentation externe.

De préférence, le bras comprend une vanne pilotable par une commande de la machine de formage de verre pour émettre une flamme et/ou fumée de graissage à un instant déterminé lorsque le bras est en position de lubrification.

En particulier, la vanne pilotable est paramétrable pour définir la longueur de la flamme et/ou fumée de graissage par le temps d'ouverture. La fait que la flamme et/ou fumée de graissage soit aspirée permet de réduire la quantité de gaz de combustion utilisé car la totalité ou la quasi-totalité de la flamme et/ou fumée de graissage sert à la lubrification au contraire d'un système sans aspiration dans lequel une bonne partie de la flamme et/ou fumée de graissage reste hors de la chambre d'ébauche. En effet, la buse d'émission est à distance de l'ouverture de passage.

Selon un aspect de l'invention, les résidus de combustion comprennent et en particulier sont constitués de noir de carbone. Alternativement, les résidus de combustion peuvent être d'autres composés aux propriétés de lubrification équivalentes au noir de carbone.

Selon un aspect de l'invention, le produit pour la combustion est de la famille des alcènes. En particulier, le produit de combustion est de l'acétylène et les résidus de combustion du noir de carbone.

De préférence, lors de la lubrification, le guide de chargement est en position de coopération. Alternativement, il est possible de prévoir une lubrification par combustion lorsque le guide de chargement est en position rétractée.

Selon un aspect de l'invention, la machine de formage de verre comprend un arbre fixe sur lequel sont rapportés le bras pour la lubrification et le guide de chargement, le bras pour la lubrification et le guide de chargement étant agencés pour se déplacer par rapport à l'arbre fixe conjointement ou séparément selon l'axe de déplacement et pour se déplacer séparément en rotation autour de l'axe de déplacement.

Selon une alternative, l'arbre fixe est utilisé pour le bras seul et le guide de chargement est déplacé par un autre dispositif de la machine de formage ou alors aucun guide de chargement n'est utilisé.

Selon un aspect de l'invention, l'au moins une section comprend un mécanisme de fermeture pour le moule d'ébauche incluant un support monté mobile en rotation et en translation selon un axe de fermeture parallèle à l'au moins un axe d'extension propre, le mécanisme de fermeture comprenant en outre un fond ébaucheur rapporté sur le support et agencé pour être déplacé par le support entre une position fermée dans laquelle le fond ébaucheur referme l'au moins une ouverture de passage par contact avec le moule d'ébauche ou le guide de chargement en position de coopération.

Le fond ébaucheur permet de refermer le moule d'ébauche : soit il coopère directement avec le moule d'ébauche soit il coopère avec le guide de chargement qui est en position de coopération.

Selon un aspect de l'invention, la machine de formage de verre comprend au moins deux sections alignées transversalement à l'au moins un axe d'extension propre. Selon un exemple, la machine de formage de verre comprend quatre sections alignées.

Selon un aspect de l'invention, chaque section comprend un dispositif de soufflage d'ébauche raccordé à une ouverture de soufflage d'ébauche ménagée dans l'au moins une chambre d'ébauche, l'ouverture de soufflage étant l'orifice auquel est raccordé le conduit d'évacuation correspondant.

Cette disposition permet de profiter d'un orifice déjà présent dans la chambre d'ébauche pour raccorder le conduit d'évacuation correspondant.

Le dispositif de soufflage d'ébauche permet la mise en forme de la paraison par soufflage.

Selon une autre possibilité, la machine de formage comprend à la place du dispositif de soufflage d'ébauche, un dispositif de pressage adapté pour créer une ébauche à partir de la paraison par mouvement d'au moins un élément du dispositif de pressage.

Il apparait ainsi que le dispositif d'aspiration peut être adapté à différents types de machine de formage d'ébauche à partir de paraison, soit des machines de formage par soufflage soit des machines de formage par pressage soit d'autres types de machines adaptées pour réaliser des ébauches.

Chaque section comprend également un système de poinçonnage avec une pièce mobile pour créer un creux dans la paraison avant le soufflage.

La présence du creux permet de contrôler la mise en forme par soufflage et permet ainsi d'obtenir des ébauches en verre de géométrie identique en faisant grandir le creux par soufflage jusqu'à ce que la paraison s'étende et vienne prendre forme sur les parois de la chambre d'ébauche et du fond ébaucheur.

Selon un aspect de l'invention, l'ouverture de soufflage d'ébauche est opposée à l'ouverture de passage selon l'axe d'extension propre.

Cette géométrie participe à la bonne répartition des résidus de combustion dans la chambre d'ébauche. La flamme et/ou fumée de graissage est stable car la géométrie de l'intérieur de la chambre d'ébauche est connue et il n'y a pas d'influence de la circulation d'air extérieure.

Selon un aspect de l'invention, la machine de formage de verre comprend un bâti apte à reposer sur un sol plan de sorte à ce que l'au moins axe d'extension propre soit vertical.

Cette disposition facilite l'aspiration de la flamme et/ou fumée de graissage qui a tendance à s'élever et est ramenée vers le sol par le dispositif d'aspiration. En effet, l'ouverture de passage est située en haut et l'ouverture de soufflage en bas.

Selon une possibilité, chaque section comprend plusieurs moules d'ébauche. Ces moules d'ébauche peuvent être alignés. Ainsi, selon un exemple, avec deux moules d'ébauche alignés, chaque guide de chargement comprend deux entonnoirs correspondant. Egalement, selon une autre possibilité, un moule d'ébauche peut comprendre plusieurs chambres d'ébauche.

Selon un aspect de l'invention, le moule d'ébauche comprend deux parties aptes à être éloignées l'une de l'autre de sorte à permettre l'extraction de l'au moins une ébauche en verre correspondante.

Cette disposition est utile pour extraire l'ébauche en verre lorsque celle-ci est terminée. Les deux parties sont éloignées seulement lors de l'extraction. Elles coopèrent donc bien lors de la lubrification et du soufflage.

Selon un aspect de l'invention, chaque section comprend une plateforme de transfert adaptée pour extraire l'au moins une ébauche en verre du moule d'ébauche et déposer l'au moins une ébauche en verre dans un moule de finition de ladite section.

Une partie du dispositif de soufflage d'ébauche peut être rapportée sur la plateforme de transfert, de sorte à permettre le déplacement de l'ébauche en verre par la portion de l'ébauche en verre en contact avec ladite partie.

En pratique, la paraison est gonflée par le bas dans le moule d'ébauche, puis l'ébauche en verre est gonflée par le haut dans le moule de finition.

La machine de formage de verre comprend en outre un dispositif de déplacement pourvu de pinces et un tapis convoyeur qui emmène l'article obtenu vers des systèmes de finition adaptés pour le traitement de surface, la re-cuisson, et différents contrôles avant palettisation.

Les différents aspects définis ci-dessus non incompatibles peuvent être combinés.

### Brève description des figures

L'invention sera mieux comprise à l'aide de la description détaillée qui est exposée ci-dessous en regard des dessins annexés.
[Fig. 1] est une vue schématique d'une machine de formage de verre comprenant un dispositif d'aspiration de flamme et/ou fumée de graissage.
[Fig. 2] est une vue schématique d'un raccord d'aspiration du dispositif d'aspiration de flamme et/ou fumée de graissage.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

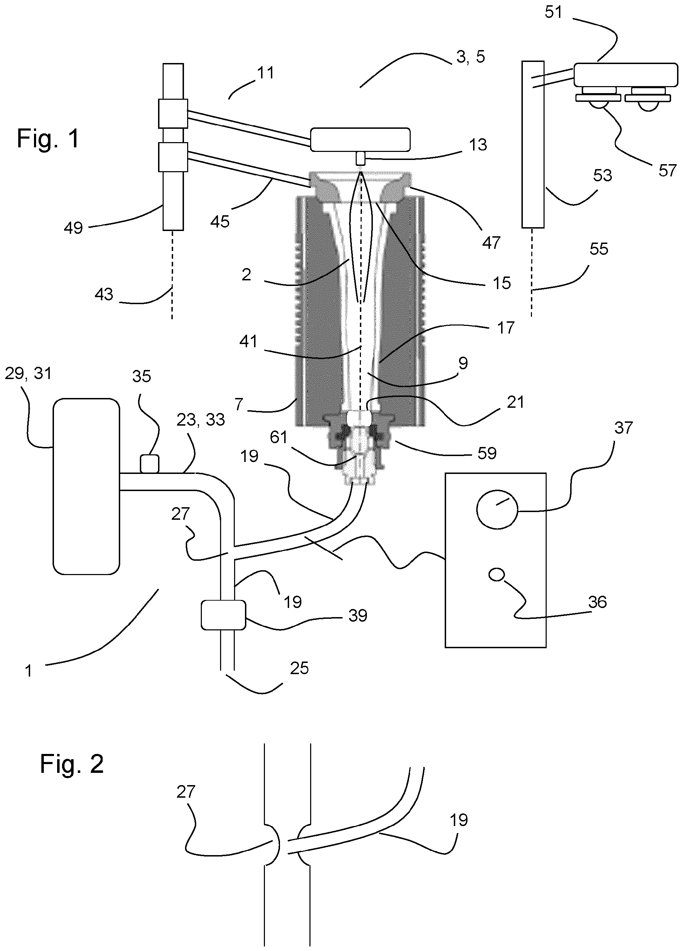

Comme illustré à la figure 1, un dispositif d'aspiration 1 de flamme et/ou fumée de graissage 2 est compris dans une machine de formage de verre 3.

La machine de formage de verre 3 comprend au moins une section 5 de formage de verre, ladite section comprenant un moule d'ébauche 7 pour former au moins une ébauche en verre.

Le moule d'ébauche 7 présente au moins une chambre d'ébauche 9 destinée à recevoir une paraison correspondante pour la transformer en ébauche en verre.

La machine de formage de verre 3 comprend en outre un bras 11 pour la lubrification équipé d'au moins une buse d'émission 13 de la flamme et/ou fumée de graissage 2 entrant dans la chambre d'ébauche 9 correspondante par une ouverture de passage 15 pour la paraison.

Ceci permet de recouvrir une surface interne 17 de ladite chambre d'ébauche 9 avec des résidus de combustion ayant des propriétés de lubrification.

Le dispositif d'aspiration 1 comprend au moins un conduit d'évacuation 19 configuré pour être raccordé à un orifice 21 ménagé dans une chambre d'ébauche 9 correspondante.

Le dispositif d'aspiration 1 comprend un mécanisme d'aspiration 23 configuré pour créer dans l'au moins un conduit d'évacuation 19 une sous-pression de sorte à engendrer une aspiration dans ladite chambre d'ébauche 9 vers une extrémité d'échappement 25 vers l'extérieur de l'au moins un conduit d'évacuation 19.

En d'autres termes, le mécanisme d'aspiration 23 créé une aspiration à l'intérieur de chaque chambre d'ébauche 9. La chambre d'ébauche 9 présente une ouverture vers l'extérieur qui est l'ouverture de passage 15. C'est cette ouverture de passage 15 qui crée à son tour une aspiration vers l'intérieur de ladite chambre d'ébauche 9.

Par « sous-pression », il est entendu une pression inférieure à la pression dans la chambre d'ébauche 9 de sorte à créer une circulation des gaz présents dans la chambre d'ébauche 9.

Cette disposition permet ainsi d'aspirer la flamme et/ou fumée de graissage 2 vers l'intérieur de la chambre d'ébauche 9 et ainsi diminuer la portion de la flamme et/ou fumée de graissage 2 à l'extérieur de la chambre d'ébauche 9 au niveau de l'ouverture de passage 15.

L'expression « flamme et/ou fumée de graissage 2 entrant dans la chambre d'ébauche 9 » signifie que la flamme et/ou fumée de graissage 2 est émise à l'extérieur de la chambre d'ébauche 9 par la buse d'émission 13 qui est distante de l'ouverture de passage 15. La flamme et/ou fumée de graissage 2 pénètre ainsi dans la chambre d'ébauche 9 par l'ouverture de passage 15.

Le mécanisme d'aspiration 1 comprend au moins un raccord d'aspiration 27 configuré pour raccorder l'au moins un conduit d'évacuation 19 à une source de gaz 29 sous pression de la machine de formage de verre 3 pour créer la sous-pression.

Ici, la source de gaz 29 inclut un réservoir 31 sous pression et un tuyau 33 menant au raccord d'aspiration 27.

La machine de formage de verre 3 comprend une source de gaz 29 sous pression utilisée par exemple pour le pilotage de certains éléments de la machine de formage de verre 3 comme des vannes ou vérins pneumatiques.

Le dispositif d'aspiration 1 de flamme et/ou fumée de graissage 2 utilise la source de gaz 29 sous pression déjà présente, ce qui est avantageux pour limiter l'encombrement et la maintenance du dispositif d'aspiration 1 de flamme et/ou fumée de graissage 2.

La source de gaz 29 sous pression peut comprendre un compresseur à air et un réservoir d'air sous pression ainsi qu'un ensemble de tuyaux 33 de raccordement. La source de gaz sous pression peut alternativement comprendre une bouteille de gaz sous pression à remplacer régulièrement.

Selon une possibilité, le dispositif d'aspiration 1 de flamme et/ou fumée de graissage 2 comprend une pluralité de conduits d'évacuation 19 indépendants, un raccord d'aspiration 27 étant ménagé dans chaque conduit d'évacuation 19.

Selon une autre possibilité, le dispositif d'aspiration 1 de flamme et/ou fumée de graissage 2 comprend une pluralité de conduits d'évacuation 19 raccordés ensemble vers une unique extrémité d'échappement 25 vers l'extérieur.

Dans ce cas, il est possible de prévoir un seul raccord d'aspiration 27 apte à créer une dépression dans l'ensemble des conduits d'évacuation 19.

Comme illustré à la figure 2, l'au moins un raccord d'aspiration 27 présente une géométrie interne agencée pour induire un effet venturi pour créer la sous-pression.

Pour favoriser l'aspiration, le gaz sous pression passe dans une partie du raccord d'aspiration 27 apte à engendrer un effet venturi. Par l'accélération du gaz sous pression dans cette partie, la pression du gaz est diminuée. La sous-pression est ainsi engendrée dans le conduit d'évacuation 19.

Le mécanisme d'aspiration 1 comprend une vanne de réglage 35 d'ouverture d'alimentation en gaz en provenance de la source de gaz 29 sous pression.

Cette disposition permet de régler la quantité de gaz qui est injectée dans l'au moins un raccord d'évacuation 19. Plus la vanne de réglage 35 est ouverte plus la dépression sera importante et plus l'aspiration sera importante.

La vanne de réglage 35 comprend une commande utilisateur 36 pour régler l'ouverture. Le mécanisme d'aspiration 23 comprend un manomètre 37 pour mesurer une pression relative à la sous-pression engendrée par l'ouverture de la vanne de réglage 35.

Cette disposition permet d'ajuster l'aspiration pour que la flamme et/ou fumée de graissage 2 soit aspirée vers l'intérieur de l'au moins une chambre d'ébauche 9 de manière suffisante pour que la flamme et/ou fumée de graissage 2 soit entièrement comprise dans la chambre d'ébauche 9 mais sans que la flamme et/ou fumée de graissage 2 ne rentre dans l'au moins un conduit d'évacuation 19.

En pratique, des essais peuvent être réalisés pour déterminer l'ouverture de la vanne de réglage 35 qui convient et la pression au manomètre 37 correspondante.

Le contrôle de la constance de la pression au manomètre 37 permet ainsi de s'assurer du bon réglage et éventuellement d'ajuster l'ouverture de la vanne de réglage 35.

Le dispositif d'aspiration 1 de flamme et/ou fumée de graissage 2 comprend un système de collecte de résidus 39 raccordé à l'au moins un conduit d'évacuation 19 de sorte à ce qu'un gaz d'échappement émis à l'au moins une extrémité d'échappement 25 comprenne une quantité de particules volatiles en deçà d'une limite déterminée.

Le système de collecte de résidus 39 est monté sur une portion du conduit d'évacuation 19.

Le gaz d'échappement est issu de la combustion de la flamme et/ou fumée de graissage 2 dans l'au moins une chambre d'ébauche 9. Le but est de tapisser l'intérieur de l'au moins une chambre d'ébauche 9 de résidus de combustion qui sont des imbrulés ayant des propriétés de lubrification.

Cependant, l'aspiration peut entraîner une partie de ces résidus dans l'au moins un conduit d'évacuation 19. Le système de collecte de résidus 39 évite ainsi de relâcher dans l'air ambiant à proximité de la machine de formage de verre 3 les résidus entrainés.

La limite déterminée correspond à la performance de filtrage et au réglage du système de collecte de résidus 39. Ici, le système de collecte de résidus peut être un séparateur humide.

La machine de formage de verre 3 comprend le bras 11 pour la lubrification qui est équipé d'au moins une buse d'émission 13 de flamme et/ou fumée de graissage 2.

Le bras 11 pour la lubrification est apte à se déplacer, entre une position rétractée dans laquelle le bras est disposé hors d'une zone en regard de l'au moins une ouverture de passage 15 selon un axe d'extension propre 41 de ladite chambre d'ébauche 9 et une position de lubrification représentée à la figure 1 dans laquelle l'au moins une buse d'émission 13 est alignée avec l'axe d'extension propre 41 correspondant et est apte à émettre une flamme et/ou fumée de graissage 2 entrant dans la chambre d'ébauche 9 correspondante pour recouvrir une surface interne 17 de ladite chambre d'ébauche 9 avec des résidus de combustion ayant des propriétés de lubrification.

L'ouverture de passage 15 est agencée pour l'entrée de la paraison selon la direction d'extension propre 41. La lubrification est réalisée avant l'entrée de la paraison pour assurer une bonne lubrification.

Il a été observé que la couche de résidus présente une épaisseur limitée permettant de réaliser juste après la lubrification une ébauche en verre directement utilisable.

Le bras 11 pour la lubrification est apte à se déplacer autour et le long d'un axe de déplacement 43, parallèle à l'au moins un axe d'extension propre 41.

La machine de formage de verre 3 comprend également un guide de chargement 45 présentant au moins un entonnoir 47 adapté pour guider axialement une paraison correspondante en une position de coopération avec le moule d'ébauche 7 dans laquelle un passage de l'au moins un entonnoir 47 est axialement aligné avec l'au moins une ouverture de passage 15 correspondante.

Chaque section 5 comprend en outre un poste de découpe pour former l'au moins une paraison à partir de verre fondu.

Chaque section 5 comprend un conduit d'acheminement d'un produit pour la combustion agencé pour coopérer avec le bras 11 et alimenter la buse d'émission 13 d'une flamme et/ou fumée de graissage 2, ledit conduit d'acheminement étant raccordé à un réservoir de produit pour la combustion de la machine de formage de verre 3 ou un raccord à une alimentation externe.

Le bras 11 comprend une vanne pilotable par une commande de la machine de formage de verre 3 pour émettre une flamme et/ou fumée de graissage 2 à un instant déterminé lorsque le bras 11 est en position de lubrification.

La vanne pilotable est paramétrable pour définir la longueur de la flamme et/ou fumée de graissage 2 par le temps d'ouverture. La fait que la flamme et/ou fumée de graissage 2 soit aspirée permet de réduire la quantité de gaz de combustion utilisé car la totalité ou la quasi-totalité de la flamme et/ou fumée de graissage 2 sert à la lubrification au contraire d'un système sans aspiration dans lequel une bonne partie de la flamme et/ou fumée de graissage 2 reste hors de la chambre d'ébauche 9. En effet, la buse d'émission 13 est à distance de l'ouverture de passage 15.

Les résidus de combustion comprennent et en particulier sont constitués de noir de carbone. Alternativement, les résidus de combustion peuvent être d'autres composés aux propriétés de lubrification équivalentes au noir de carbone.

Le produit pour la combustion peut également être de l'acétylène et les résidus de combustion du noir d'acétylène.

Lors de la lubrification, le guide de chargement 45 est en position de coopération. Alternativement, il est possible de prévoir une lubrification par combustion lorsque le guide de chargement 45 est en position rétractée.

La machine de formage de verre 3 comprend un arbre fixe 49 sur lequel sont rapportés le bras 11 pour la lubrification et le guide de chargement 45, le bras 11 pour la lubrification et le guide de chargement 45 étant agencés pour se déplacer par rapport à l'arbre fixe 49 conjointement ou séparément selon l'axe de déplacement 43 et pour se déplacer séparément en rotation autour de l'axe de déplacement 43.

L'au moins une section 5 comprend un mécanisme de fermeture 51 pour le moule d'ébauche 7 incluant un support 53 monté mobile en rotation et en translation selon un axe de fermeture 55 parallèle à l'au moins un axe d'extension propre 41, le mécanisme de fermeture 51 comprenant en outre un fond ébaucheur 57 rapporté sur le support 53 et agencé pour être déplacé par le support 53 entre une position fermée dans laquelle le fond ébaucheur 57 referme l'au moins une ouverture de passage 15 par contact avec le moule d'ébauche 7 ou le guide de chargement 45 en position de coopération.

Le fond ébaucheur 57 permet de refermer le moule d'ébauche 7 : soit il coopère directement avec le moule d'ébauche 7 pour le soufflage de l'ébauche en verre soit il coopère avec le guide de chargement 45 qui est en position de coopération pour une étape préliminaire de compression permettant de faire descendre la paraison au fond de la chambre d'ébauche 9 en combinaison d'une mise sous pression d'air ou de gaz réalisée par un dispositif dédié.

La machine de formage de verre 3 comprend au moins deux sections 5 alignées transversalement à l'au moins un axe d'extension propre 41.

Chaque section 5 comprend un dispositif de soufflage d'ébauche 59 raccordé à une ouverture de soufflage d'ébauche ménagée dans l'au moins une chambre d'ébauche 9, l'ouverture de soufflage étant l'orifice 21 auquel est raccordé le conduit d'évacuation 19 correspondant.

Cette disposition permet de profiter d'un orifice 21 déjà présent dans la chambre d'ébauche 9 pour raccorder le conduit d'évacuation 19 correspondant.

Le dispositif de soufflage d'ébauche 59 permet la mise en forme de la paraison par soufflage. Ici le mécanisme permettant le soufflage n'est pas détaillé dans les figures.

Chaque section 5 comprend également un système de poinçonnage 61 avec une pièce mobile pour créer un creux dans la paraison avant le soufflage lorsqu'elle est remontée, la pièce mobile étant ici abaissée pour permettre l'aspiration de flamme et/ou fumée de graissage.

La présence du creux permet de contrôler la mise en forme par soufflage et permet ainsi d'obtenir des ébauches en verre de géométrie identique en faisant grandir le creux par soufflage jusqu'à ce que la paraison s'étende et vienne prendre forme sur les parois de la chambre d'ébauche 9 et du fond ébaucheur 57.

L'ouverture de soufflage d'ébauche est opposée à l'ouverture de passage 15 selon l'axe d'extension propre 41.

Cette géométrie participe à la bonne répartition des résidus de combustion dans la chambre d'ébauche 9. La flamme et/ou fumée de graissage 2 est stable car la géométrie de l'intérieur de la chambre d'ébauche 9 est connue et il n'y a pas d'influence de la circulation d'air extérieure.

La machine de formage de verre 3 comprend un bâti apte à reposer sur un sol plan de sorte à ce que l'au moins axe d'extension propre 41 soit vertical.

Cette disposition facilite l'aspiration de la flamme et/ou fumée de graissage 2 qui a tendance à s'élever et est ramenée vers le sol par le dispositif d'aspiration. En effet, l'ouverture de passage 15 est située en haut et l'ouverture de soufflage en bas.

Ici, chaque section comprend deux moules d'ébauche 7 alignés. Par conséquent, chaque guide de chargement 45 comprend deux entonnoirs 47.

Chaque moule d'ébauche 7 comprend deux parties aptes à être éloignées l'une de l'autre de sorte à permettre l'extraction de l'au moins une ébauche en verre correspondante.

Cette disposition est utile pour extraire l'ébauche en verre lorsque celle-ci est terminée. Les deux parties sont éloignées seulement lors de l'extraction. Elles coopèrent donc bien lors de la lubrification et du soufflage.

Chaque section 5 comprend une plateforme de transfert adaptée pour extraire l'au moins une ébauche en verre d'un moule d'ébauche 7 et déposer l'au moins une ébauche en verre dans un moule de finition correspondant de ladite section 5.

Une partie du dispositif de soufflage d'ébauche 59 peut être rapportée sur la plateforme de transfert, de sorte à permettre le déplacement de l'ébauche en verre par la portion de l'ébauche en verre en contact avec ladite partie.

En pratique, la paraison est gonflée par le bas dans le moule d'ébauche 7, puis l'ébauche en verre est gonflée par le haut dans le moule de finition.

La machine de formage de verre 3 comprend en outre un dispositif de déplacement pourvue de pinces et un tapis convoyeur qui emmène l'article obtenu vers des systèmes de finition adaptés pour le traitement de surface, la re-cuisson, et différents contrôles avant palettisation.

Il apparait ainsi que le dispositif d'aspiration de flamme et/ou fumée de graissage 1 engendre une lubrification améliorée puisque la flamme et/ou fumée de graissage 2 se décale vers l'intérieur de la chambre d'ébauche. Il y a également moins de résidus de combustion qui sont disséminés à l'extérieur de la chambre d'ébauche 9. Ceci a pour conséquence d'améliorer la propreté de la machine de formage de verre, notamment à proximité de l'au moins une ouverture de passage 15. Il y a également moins de risque pour un opérateur à proximité d'inhaler des résidus de combustion.

D'une manière générale, la lubrification est améliorée et la durée de vie du moule d'ébauche 7 est allongée car une bonne lubrification protège de l'usure.

La flamme et/ou fumée de graissage 2 est également masquée pour un observateur extérieur, ce qui diminue le dérangement visuel lié à la lubrification. Le raccordement à l'orifice 21 peut être direct ou indirect par l'utilisation d'une pièce de liaison du dispositif d'aspiration 1 de flamme et/ou fumée de graissage 2.

Comme il va de soi, l'invention ne se limite pas à la seule forme d'exécution décrite ci-dessus à titre d'exemple, elle en embrasse au contraire toutes les variantes de réalisation.

## Revendications

1. Dispositif d'aspiration (1) de flamme et/ou fumée de graissage (2) pour une machine de formage de verre (3), la machine de formage de verre (3) comprenant au moins une section (5) de formage de verre, ladite section (5) comprenant un moule d'ébauche (7) pour former au moins une ébauche en verre, le moule d'ébauche (7) présentant au moins une chambre d'ébauche (9) destinée à recevoir une paraison correspondante pour la transformer en ébauche en verre, le dispositif d'aspiration (1) de flamme et/ou fumée de graissage (2) comprenant :
- au moins un conduit d'évacuation (19) configuré pour être raccordé à un orifice (21) ménagé dans une chambre d'ébauche (9) correspondante,
- un mécanisme d'aspiration (23) configuré pour créer dans l'au moins un conduit d'évacuation (19) une sous-pression de sorte à engendrer une aspiration dans ladite chambre d'ébauche (9) vers une extrémité d'échappement (25) vers l'extérieur de l'au moins un conduit d'évacuation (19).

2. Dispositif d'aspiration (1) de flamme et/ou fumée de graissage (2) selon la revendication 1, dans lequel le mécanisme d'aspiration (23) comprend au moins un raccord d'aspiration (27) configuré pour raccorder l'au moins un conduit d'évacuation (19) à une source de gaz (29) sous pression de la machine de formage de verre (3) pour créer la sous-pression.

3. Dispositif d'aspiration (1) de flamme et/ou fumée de graissage (2) selon la revendication 2, dans lequel l'au moins un raccord d'aspiration (27) présente une géométrie interne agencée pour induire un effet venturi pour créer la sous-pression.

4. Dispositif d'aspiration (1) de flamme et/ou fumée de graissage (2) selon l'une des revendications 2 ou 3, dans lequel le mécanisme d'aspiration (23) comprend une vanne de réglage (35) d'ouverture d'alimentation en gaz en provenance de la source de gaz (29) sous pression.

5. Dispositif d'aspiration (1) de flamme et/ou fumée de graissage (2) selon l'une des revendications 1 à 4, comprenant un système de collecte de résidus (39) raccordé à l'au moins un conduit d'évacuation (19) de sorte à ce qu'un gaz d'échappement émis à l'au moins une extrémité d'échappement (25) comprenne une quantité de particules volatiles en deçà d'une limite déterminée.

6. Machine de formage de verre (3) comprenant un dispositif d'aspiration (1) de flamme et/ou fumée de graissage (2) selon l'une des revendications 1 à 5.

7. Machine de formage de verre selon la revendication 6, dans laquelle la machine de formage de verre (3) comprend en outre un bras (11) pour la lubrification équipé d'au moins une buse d'émission (13) de flamme et/ou fumée de graissage (2), le bras (11) pour la lubrification étant apte à se déplacer, entre une position rétractée dans laquelle le bras (11) est disposé hors d'une zone en regard de l'au moins une ouverture de passage (15) selon un axe d'extension propre (41) de ladite chambre d'ébauche (9) et une position de lubrification dans laquelle l'au moins une buse d'émission (13) est alignée avec l'axe d'extension propre (41) correspondant et est apte à émettre une flamme et/ou fumée de graissage (2) entrant dans la chambre d'ébauche (9) correspondante pour recouvrir une surface interne (17) de ladite chambre d'ébauche (9) avec des résidus de combustion ayant des propriétés de lubrification.

8. Machine de formage de verre (3) selon la revendication 7, dans laquelle chaque section (5) comprend un dispositif de soufflage d'ébauche (59) raccordé à une ouverture de soufflage d'ébauche ménagée dans l'au moins une chambre d'ébauche (9), l'ouverture de soufflage étant l'orifice (21) auquel est raccordé le conduit d'évacuation (19) correspondant.

9. Machine de formage de verre (3) selon la revendication 8, dans laquelle l'ouverture de soufflage d'ébauche est opposée à l'ouverture de passage (15) selon l'axe d'extension propre (41).

10. Machine de formage de verre (3) selon la revendication 9, comprenant un bâti apte à reposer sur un sol plan de sorte à ce que l'au moins axe d'extension propre (41) soit vertical.
